# EUROPÄISCHE PATENTSCHRIFT

(11) **EP 4 290 712 B1**
(45) Veröffentlichungstag und Bekanntmachung des Hinweises auf die Patenterteilung: **02.04.2025**
(21) Anmeldenummer: 22178361.6
(22) Anmeldetag: 10.06.2022
(51) Int. Cl.: H02G 1/12, H01R 43/28

(54) **VERFAHREN UND VORRICHTUNG ZUM ENTDRILLEN UND GLÄTTEN EINES KABELENDES EINES VERDRILLTEN KABELS**
METHOD AND DEVICE FOR DETWISTING AND SMOOTHING A CABLE END OF A TWISTED CABLE
PROCÉDÉ ET DISPOSITIF PERMETTANT DE TORSADER ET DE REDRESSER UNE EXTRÉMITÉ DE CÂBLE D'UN CÂBLE TORSADÉ

(43) Veröffentlichungstag der Anmeldung: 13.12.2023
(73) Patentinhaber: komax Holding AG, 6036 Dierikon (CH)
(72) Erfinder: GUT, Daniel, 6353 Weggis (CH); LOSONCZY, Andras, 6344 Meierskappel (CH)
(74) Vertreter: EGLI-EUROPEAN PATENT ATTORNEYS

(56) Entgegenhaltungen:
- EP-A1- 3 886 273
- DE-A1- 19 631 770
- DE-A1- 3 224 840
- DE-A1- 4 417 834
- DE-C1- 19 528 430
- US-A1- 2019 103 737

## Beschreibung

### Technisches Gebiet

Die vorliegende Offenbarung betrifft ein Verfahren und eine Vorrichtung zum Entdrillen und Glätten eines Kabelendes eines verdrillten Kabels.

### Stand der Technik

Verdrillte Kabel sind aus Einzelleitungen gebildet, die in einer Verdrillrichtung umeinander geschlungen, d. h. verdrillt sind. Durch das Verdrillen werden die Signalübertragungseigenschaften des Kabels massgeblich verbessert.

Es ist mitunter wünschenswert, einen Endbereich des Kabels, d. h. ein Kabelende, wieder zu entdrillen. Beim Entdrillen, wie hierin verwendet, soll durch Aufheben der gegenseitigen Umschlingung der Einzelleitungen in dem begrenzten Bereich des Kabelendes ein Zustand hergestellt werden, in welchem die Einzelleitungen weitgehend parallel zueinander verlaufen.

Ein Entdrillen kann z. B. wünschenswert sein, wenn bei der Herstellung eines verdrillten Kabels die Einzelleitungen nicht erst nach dem Konfektionieren verdrillt werden, sondern zum Konfektionieren bereits verdrilltes Ausgangsmaterial verwendet wird. Konfektionieren umfasst typischerweise, dass die einzelnen Leitungen an mindestens einem ihrer Enden abgelängt, abisoliert und/oder mit Kontakten, Tüllen etc. versehen werden. Gelegentlich erfordert ein Konfektionieren ein sauber geglättetes Kabelende.

Ein Entdrillen ist insbesondere schwierig, wenn die Einzelleitungen einen vergleichsweise kleinen Leitungsquerschnitt aufweisen. Beispielsweise werden bei Einzelleitungen mit kleinem Leitungsquerschnitt besondere Legierungen wie z. B. Kupferlegierungen verwendet, deren Materialeigenschaften ein besonders schonendes Entdrillen erfordern.

Aus der DE 44 17 834 A1 ist eine Vorrichtung und ein Verfahren zum Geraderichten von Leiterdrahtenden bekannt. Die Vorrichtung umfasst eine Auflageplatte und eine Richtplatte, die auf der Auflageplatte liegt. Die Platten werden beim Geraderichten zueinander bewegt, und zwar derart, dass eine der beiden Platten etwa parallel in Richtung zum Leiterdrahtende abgezogen wird und gleichzeitig eine oszillierende Hin- und Herbewegung der Platte etwa quer zu einer Abzugsrichtung des Kabels ausgeführt wird.

US 2019/103737 offenbart eine Vorrichtung und ein Verfahren zum Entdrillen und Glätten der Enden eines verdrillten Leitungspaars.

EP 3 886 273 A1 offenbart ein Entdrillungsverfahren, aber die kombinierte Verfahren zum Glätten (Geraderichten) von Leiterdrahtenden wird nicht offenbart.

DE 44 17 834 A1 offenbart ein Vorrichtung und Verfahren zum Glätten (Geraderichten) von Leiterdrahtenden, mit oszillierende Bewegungen und pneumatische Abisolierzylindern, aber das Entdrillungsverfahren wird nicht offenbart.

### Mit der Offenbarung zu lösende Probleme

Das bekannte Verfahren und die bekannte Vorrichtung führen zu einem Kabelende mit einer vergleichsweise hohen Restwelligkeit, d. h. das erhaltene Kabelende ist nicht ausreichend sauber geglättet für eine anschliessende Konfektionierung. Zudem sind das bekannte Verfahren und die bekannte Vorrichtung nicht geeignet, um ein zuverlässiges Entdrillen bei einem Kabel aus Einzelleitungen mit einem vergleichsweise kleinen Leitungsquerschnitt durchzuführen.

Es ist eine Aufgabe der vorliegenden Offenbarung, eine Vorrichtung oder ein Verfahren zum Entdrillen und Glätten eines Kabelendes eines verdrillten Kabels anzugeben, mit denen ein zuverlässiges Glätten mit einfachen, platzsparenden Mitteln erzielt wird.

### Lösung der Probleme

Gemäss der vorliegenden Offenbarung werden ein Verfahren nach Anspruch 1 oder eine Vorrichtung nach Anspruch 9 angegeben.

Gemäss einem Aspekt umfasst eine Vorrichtung einen Entdrillgreifer, einen Klemmgreifer und einen Kabelgreifer. Der Entdrillgreifer umfasst eine erste Entdrillbacke und eine zweite Entdrillbacke, wobei die erste und zweite Entdrillbacke zum Halten eines eingebrachten Kabels aufeinander zu bewegt werden können (d. h. geschlossen werden können) und zum Entspannen bzw. Entklemmen eines eingebrachten Kabels voneinander weg bewegt werden können (d. h. geöffnet werden können). Das eingebrachte Kabel ist aus einer Mehrzahl von Einzelleitungen gebildet. Die Einzelleitungen sind um eine Kabellängsachse, oder kurz Kabelachse, in einer Verdrillrichtung verdrillt. Der Klemmgreifer umfasst eine erste Klemmplatte und eine zweite Klemmplatte, wobei die erste und zweite Klemmplatte zum Klemmen eines eingebrachten Kabels aufeinander zu bewegt werden können (d. h. geschlossen werden können) und zum Entspannen bzw. Entklemmen eines eingebrachten Kabels voneinander weg bewegt werden können (d. h. geöffnet werden können). Der Klemmgreifer ist im Kabelverlauf eines in die Vorrichtung eingebrachten Kabels aufwärts des Entdrillgreifers angeordnet. Der Kabelgreifer ist im Kabelverlauf aufwärts des Klemmgreifers angeordnet. Beim Verfahren wird das Kabel mit dem Kabelgreifer gegriffen, insbesondere automatisch gegriffen. Das Kabelende wird, insbesondere durch automatisches Verschwenken und/oder automatisches Verfahren, zwischen die geöffneten Klemmbacken und die geöffneten Entdrillbacken eingebracht. Die Klemmplatten und die Entdrillbacken werden geschlossen. Der Entdrillgreifer wird in Entdrillrichtung entgegen der Verdrillrichtung der Einzelleitungen des Kabels rotiert, so dass das Kabelende entdrillt wird. Die Entdrillbacken werden geöffnet. Der Abstand der Entdrillbacken zu den Klemmplatten entlang der Kabelachse wird verkleinert. Die Entdrillbacken werden wieder geschlossen. Ein Glättvorgang des Kabelendes zum Glätten des Kabelendes wird durchgeführt. Der Glättvorgang umfasst gleichzeitig ausgeführte Schritte, und zwar ein Vergrössern des Abstandes zwischen Kabelgreifer und Klemmgreifer bei geklemmtem Kabel und ein Ausüben von oszillierenden Drehbewegungen des Entdrillgreifers.

In einem Beispiel umfasst eine oszillierende Drehbewegung ein Drehen des Entdrillgreifers um einen ersten Winkelbetrag in einer ersten Drehrichtung, d. h. entweder im Uhrzeigersinn oder im Gegenuhrzeigersinn, ein anschliessendes Drehen des Entdrillgreifers um einen zweiten Winkelbetrag in einer zweiten Drehrichtung, die der ersten Drehrichtung entgegengesetzt ist, d. h. in Abhängigkeit von der Richtung der ersten Drehbewegung entweder im Gegenuhrzeigersinn oder im Uhrzeigersinn, und ein anschliessendes Drehen um einen dritten Winkelbetrag in der ersten Drehrichtung. Der erste Winkelbetrag kann beispielsweise in etwa gleich dem dritten Winkelbetrag sein. Der zweite Winkelbetrag kann beispielsweise in etwa das Doppelte des ersten Winkelbetrags betragen. Dann ist eine oszillierende Drehbewegung gemäss diesem Beispiel abgeschlossen.

In einem weiteren Beispiel umfasst eine oszillierende Drehbewegung ein Drehen des Entdrillgreifers um einen ersten Winkelbetrag in einer ersten Drehrichtung, d. h. entweder im Uhrzeigersinn oder im Gegenuhrzeigersinn, ein anschliessendes Drehen des Entdrillgreifers um einen zweiten Winkelbetrag in einer zweiten Drehrichtung, die der ersten Drehrichtung entgegengesetzt ist, d. h. in Abhängigkeit von der Richtung der ersten Drehbewegung entweder im Gegenuhrzeigersinn oder im Uhrzeigersinn. Der erste Winkelbetrag kann in etwa gleich dem zweiten Winkelbetrag sein. Dann ist eine oszillierende Drehbewegung gemäss diesem Beispiel abgeschlossen.

In noch einem weiteren Beispiel umfasst eine oszillierende Drehbewegung ein Drehen des Entdrillgreifers um nicht festgelegte, beispielsweise zufällige Werte in einer ersten Drehrichtung, d. h. entweder im Uhrzeigersinn oder im Gegenuhrzeigersinn, und in einer zweiten Drehrichtung, d. h. in Abhängigkeit von der Richtung der ersten Drehbewegung entweder im Gegenuhrzeigersinn oder im Uhrzeigersinn. Eine oszillierende Drehbewegung gemäss diesem Beispiel ist abgeschlossen, wenn vom Start aus einer Ausgangslage des Entdrillgreifers zu Beginn des Glättvorgangs aus der Entdrillgreifer die Ausgangslage nach Drehung in der ersten Drehrichtung und in der zweiten Drehrichtung einmal passiert hat und anschliessend wieder erreicht.

Während des Glättvorgangs wird demnach das Kabelende im Wesentlichen auf seiner gesamten Länge durch die um die Leiter geschlossenen Entdrillbacken und die geschlossenen Klemmbacken gezogen. Währenddessen werden die oszillierenden Drehbewegungen mittels des Entdrillgreifers ausgeführt, die auf die Leiter übertragen werden. Im Ergebnis wird die Restwelligkeit am Kabelende verringert, und die Einzelleitungen verlaufen am Kabelende weitgehend parallel.

Weiterbildungen sind in den abhängigen Ansprüchen angegeben.

Bei Ausführungsformen werden die oszillierenden Drehbewegungen des Entdrillgreifers abwechselnd in Verdrillrichtung und Entdrillrichtung durchgeführt.

Bei Ausführungsformen werden die oszillierenden Drehbewegungen in Verdrillrichtung und in Entdrillrichtung jeweils mit weniger als einer Umdrehung des Entdrillgreifers durchgeführt, vorzugsweise mit weniger als einer Dreiviertelumdrehung oder mit weniger als einer halben Umdrehung.

Bei Ausführungsformen wird das Rotieren des Entdrillgreifers in einer Entdrillrichtung entgegen der Verdrillrichtung zum Entdrillen des Kabelendes über ein vollständiges Entdrillen der Einzelleitungen des Kabelendes hinaus fortgesetzt wird, insbesondere um mehr als eine halbe Umdrehung des Entdrillgreifers oder um mehr als eine Umdrehung des Entdrillgreifers. Ein solches Über-Entdrillen kann an eine Elastizität der Einzelleitungen angepasst sein. Beispielsweise kann bei besonders elastischen Einzelleitungen, die ein vergleichsweise grosses Formgedächtnis aufweisen, ein Über-Entdrillen durchgeführt werden. Auf das Über-Entdrillen kann ein Zurückdrehen um den übermässigen Winkelbetrag erfolgen, um das Entdrillen zu vervollständigen

Bei Ausführungsformen wird vor dem Glättvorgang die Schliesskraft der Klemmplatten verringert. Alternativ oder zusätzlich, vorzugsweise zusätzlich, wird vor dem Glättvorgang die Schliesskraft der Entdrillbacken verringert. Die Schliesskraft ist die Kraft, mit der die Klemmplatten bzw. die Entdrillbacken auf das Kabelende einwirken. Die jeweilige Schliesskraft wird bezogen auf die Vorgänge verringert, die dem Glättvorgang vorausgehen. Insbesondere kann die jeweilige Schliesskraft so verringert werden, dass ein Beschädigen einer Isolierung, die die Einzelleitungen jeweils umgibt, verhindert wird, wenn im Zuge des Glättvorgangs das geklemmte Kabel durch die Entdrillbacken und die Klemmplatten gezogen wird.

Bei Ausführungsformen werden beim Glättvorgang mindestens drei abgeschlossene oszillierende Drehbewegungen ausgeübt, z. B. drei Schwenkvorgänge des Entdrillgreifers hin und zurück. Insbesondere werden mehr als fünf oder mehr als zehn abgeschlossene oszillierende Drehbewegungen durchgeführt.

Bei Ausführungsformen wird vor dem Glättvorgang mindestens ein Parameter vorgegeben, der aus der folgenden Gruppe ausgewählt ist: Geschwindigkeit beim Vergrössern des Abstands zwischen Kabelgreifer und Klemmgreifer; Oszillationsgeschwindigkeit beim Ausüben der oszillierenden Drehbewegung; Oszillationswinkel beim Ausüben der oszillierenden Drehbewegung. Insbesondere wird der Parameter automatisch in Abhängigkeit von der Art des eingebrachten Kabelendes vorgegeben, beispielsweise in Abhängigkeit des Leiterquerschnitts, der Stärke der Isolierung, des Leitermaterials, des Isoliermaterials und/oder der Anzahl von Einzelleitungen.

Bei Ausführungsformen wird der Glättvorgang wiederholt, beispielsweise einmal, zweimal oder mehr als zweimal wiederholt. Insbesondere werden zum Wiederholen des Glättvorgangs die Klemmplatten und die Entdrillbacken geöffnet; der Abstand zwischen Kabelgreifer und Klemmgreifer wird verkleinert; die Klemmplatten und die Entdrillbacken werden geschlossen; und ein weiterer Glättvorgang wird durchgeführt.

Bei Ausführungsformen weist der Entdrillgreifer einen pneumatischen Entdrill-Parallelgreifer auf, der die Entdrillbacken trägt. Alternativ oder zusätzlich weist der Klemmgreifer einen pneumatischen Klemm-Parallelgreifer auf, der die Klemmplatten trägt. Eine pneumatische Betätigungsmöglichkeit ist besonders zuverlässig und schnell. In diesem Zusammenhang kann es vorgesehen sein, dass der pneumatische Entdrill-Parallelgreifer und/oder der pneumatische Klemm-Parallelgreifer jeweils ein Druckregelventil zum Vorgeben einer Klemmkraft umfasst. Dadurch ist eine Einstellung der Klemmkraft zum schonenden Ausführen des Glättvorganges besonders leicht möglich.

Bei Ausführungsformen ist der Entdrillgreifer zum Drehen um die Kabelachse in einem vorgebbaren, insbesondere programmierbaren Winkel ausgebildet. Dadurch ist ein besonders einfaches Konfigurieren der oszillierenden Drehbewegung möglich.

Bei Ausführungsformen ist der Klemmgreifer in Kabelrichtung verschiebbar ausgebildet, insbesondere programmierbar verschiebbar. Dadurch ist es auf einfache Weise möglich, Kabel mit unterschiedlichen Längen der entdrillten Enden zu verarbeiten.

Programmierbar, wie hierin verwendet, bezeichnet ein Vorgeben, insbesondere automatisches Vorgeben, des jeweiligen Wertes für eine automatische Ablaufsteuerung, die auf die Gegebenheiten anpassbar bzw. angepasst ist, beispielsweise die konkrete Art und Ausgestaltung des Kabelendes.

### Kurze Beschreibung der Zeichnungen

Nachfolgend werden Ausführungsformen der Offenbarung anhand der beigefügten Zeichnungen näher erläutert. Es zeigen:
Fig. 1 (a)-(c) jeweils ein verdrilltes Leitungspaar zum Verdeutlichen der hierin verwendeten Begriffe;
Fig. 2 eine perspektivische Ansicht einer Vorrichtung gemäss einer Ausführungsform;
Fig. 3 eine perspektivische Ansicht von Teilen der Vorrichtung aus Fig. 2;
Fig. 4 eine Seitenansicht auf die Teile der Vorrichtung aus Fig. 2 in einem Verfahrensablauf gemäss einer Ausführungsform;
Fig. 5 eine Seitenansicht auf die Teile der Vorrichtung aus Fig. 2 in dem Verfahrensablauf;
Fig. 6 eine Seitenansicht auf die Teile der Vorrichtung aus Fig. 2 in dem Verfahrensablauf;
Fig. 7 eine Seitenansicht auf die Teile der Vorrichtung aus Fig. 2 in dem Verfahrensablauf;
Fig. 8 eine Seitenansicht auf die Teile der Vorrichtung aus Fig. 2 in dem Verfahrensablauf.

In den Zeichnungen bezeichnen gleiche Bezugszeichen gleiche oder entsprechende Komponenten.

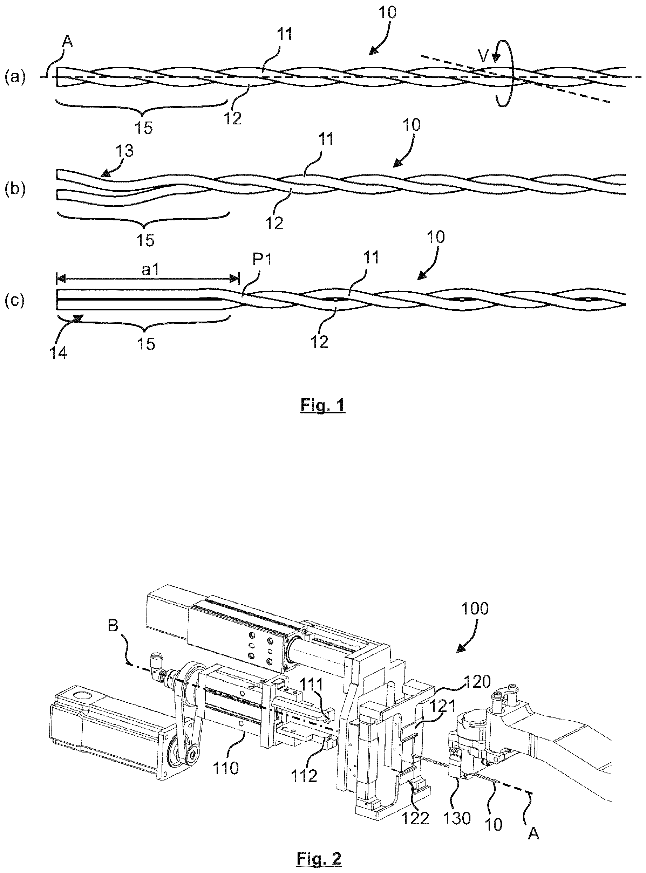

Fig. 1 zeigt oben in (a) ein verdrilltes Leitungspaar aus einer ersten Einzelleitung 11 und einer zweiten Einzelleitung 12. Das verdrillte Leitungspaar bildet ein Kabel 10. Die erste Einzelleitung 11 ist mehrfach um die zweite Einzelleitung 12 geschlagen, und zwar entlang einer Verdrillrichtung V, so dass sich entlang einer Kabellängsachse A (kurz: Kabelachse A) ein verdrillter oder verseilter Verlauf ergibt. Die Anzahl von Einzelleitungen in dem in Fig. 1 gezeigten Beispiel beträgt zwei, ist jedoch nicht auf zwei beschränkt. Es können auch mehr als zwei Einzelleitungen zu einem Kabel verdrillt werden, beispielsweise drei, vier oder mehr Leitungen. Ein in der Länge entlang der Kabelachse A beschränkter Endbereich des Kabels 10 wird als Kabelende 15 definiert. Beispiele für die Länge des Kabelendes 15 entlang der Kabelachse A schliessen eine Länge im Bereich von maximal 10 cm und minimal 5 mm ein.

In bestimmten Anwendungsfällen ist es sinnvoll oder notwendig, das Kabel 10 aus den verdrillten Einzelleitungen 11, 12 am Kabelende 15 wieder zu entdrillen, d. h. die umschlungene oder verseilte Struktur der Einzelleitungen 11, 12 um die Kabelachse A aufzuheben. Ein möglicher Grund ist, dass die Einzelleitungen 11, 12 im Bereich des Kabelendes 15 möglichst parallel zueinander und/oder möglichst parallel zur Kabelachse A und/oder möglichst glatt vorliegen sollen, beispielsweise um einen Konfektionierungsvorgang auszuführen. Ein Konfektionierungsvorgang schliesst typischerweise eines oder mehrere aus einem Ablängen, Abisolieren und/oder Versehen mit Kontakten, Tüllen etc. ein.

Zum Entdrillen werden die Einzelleitungen 11, 12 typischerweise am kabelseitigen Abschluss des Kabelendes 15 fixiert, beispielsweise geklemmt, und sie werden am endseitigen Abschluss des Kabels 10 entgegen der Verdrillrichtung V gedreht, mithin entdrillt, bis die gegenseitige Umschlingung der Einzelleitungen 11, 12 zwischen dem endseitigen Abschluss des Kabels 10 und dem kabelseitigen Abschluss des Kabelendes 15 aufgehoben ist. Gegebenenfalls kann das Entdrillen geringfügig, beispielsweise weniger als eine Umdrehung oder weniger als zwei Umdrehungen oder weniger als drei Umdrehungen, über den Punkt hinaus fortgesetzt werden, bei dem die gegenseitige Umschlingung der Einzelleitungen 11, 12 zwischen dem endseitigen Abschluss des Kabelendes 15 und dem kabelseitigen Abschluss des Kabelendes 15 aufgehoben ist (Über-Entdrillen).

Im Anschluss an das Entdrillen oder das Über-Entdrillen bei einem Verfahren und/oder einer Vorrichtung gemäss dem Stand der Technik liegt im Anschluss ein Kabel 10 gemäss Fig. 1 in der Mitte in (b) vor. Die Einzelleitungen 11, 12 am Kabelende 15 weisen zueinander eine nicht-parallele, nicht-glatte Wellenstruktur 13 auf und verlaufen nicht parallel zur Kabelachse A.

Bei einem Verfahren und/oder einer Vorrichtung gemäss der vorliegenden Offenbarung liegt im Anschluss an das Entdrillen und einen Glättvorgang ein Kabel 10 gemäss Fig. 1 unten in (c) vor. Die Einzelleitungen 10, 11 am Kabelende 15 weisen zueinander eine parallele, glatte Struktur 14 auf und verlaufen weitgehend parallel zur Kabelachse A. Das Kabelende 15 umfasst beispielsweise einen Grossteil eines Bereichs der Länge a1, der sich vom endseitigen Abschluss des Kabels 10 (in Fig. 1 das Ende des Kabels 10 auf der linken Seite) bis zu einem ersten Kreuzungspunkt P1 der Einzelleitungen 11, 12 erstreckt. Grossteil bezeichnet beispielsweise mehr als 80%, typischerweise mehr als 90% oder mehr als 95% des Bereichs der Länge a1 vom endseitigen Abschluss des Kabels 10 bis zum ersten Kreuzungspunkt P1 der Einzelleitungen 11, 12.

Fig. 2 zeigt eine perspektivische Ansicht einer Vorrichtung 100 gemäss einer Ausführungsform zum Durchführen eines hierin beschriebenen Verfahrens. Die Vorrichtung 100 ist beispielsweise Teil einer (nicht vollständig dargestellten) Kabelverarbeitungsmaschine. Die Vorrichtung 100 umfasst einen Kabelgreifer 130, einen Klemmgreifer 120 und einen Entdrillgreifer 110.

Das Kabel 10 wird vom Kabelgreifer 130 gehalten und kann mittels (nicht dargestellter) Aktoren in Richtung einer Bearbeitungsachse B der Vorrichtung 100 in den Klemmgreifer 120 und den Entdrillgreifer 110 eingebracht werden. Es ist auch denkbar, dass der Kabelgreifer das gehaltene Kabel in Richtung der Kabelachse A linear bewegt. Es ist auch möglich, dass der Kabelgreifer an einem (nicht dargestellten) Schwenkarm oder an einem (nicht dargestellten) Transfersystem angebracht ist. Es ist auch denkbar, dass das Kabel von Hand in den Kabelgreifer eingelegt wird.

Der Klemmgreifer 120 umfasst zwei Klemmplatten 121, 122. Die Klemmplatten 121, 122 sind quer zur Kabelachse A eines in die Vorrichtung eingebrachten Kabels, also in der Regel auch quer zur Bearbeitungsachse B, aufeinander zu und voneinander weg bewegbar, um das Kabel bedarfsweise zu klemmen. Im Allgemeinen fluchten die Klemmplatten 121, 122, d. h. sind im Wesentlichen ohne Versatz zueinander entlang der Bearbeitungsachse B angeordnet.

Es versteht sich, dass der Klemmgreifer 120 nicht auf zwei Klemmplatten 121, 122 beschränkt ist, und dass auch mehr als zwei Klemmplatten vorgesehen werden können.

Der Entdrillgreifer 110 umfasst zwei Entdrillbacken 111, 112. Die Entdrillbacken 111, 112 sind quer zur Kabelachse A eines in die Vorrichtung eingebrachten Kabels, also in der Regel auch quer zur Bearbeitungsachse B, aufeinander zu und voneinander weg bewegbar, um das Kabel bedarfsweise zu greifen. Im Allgemeinen fluchten die Entdrillbacken 111, 112, d. h. sind im Wesentlichen ohne Versatz zueinander entlang der Bearbeitungsachse B angeordnet.

Es versteht sich, dass der Entdrillgreifer 110 nicht auf zwei Entdrillbacken 111, 112 beschränkt ist, und dass auch mehr als zwei Entdrillbacken vorgesehen werden können.

In einem Beispiel ist der Entdrillgreifer als pneumatischer Parallelgreifer ausgebildet. Die Schliesskraft ist beispielsweise mittels eines (nicht dargstellten) Druckregelventils einstellbar.

Die Rotationsachse des Entdrillgreifers 110 fluchtet mit der Bearbeitungsachse B. Der Entdrillgreifer 110 ist um die Rotationsachse rotierbar, insbesondere automatisch rotierbar und typischerweise um einen vorgebbaren oder vorgegebenen Winkel rotierbar, und zwar wahlweise in beiden Drehrichtungen (Uhrzeigersinn, Gegenuhrzeigersinn bei Betrachtung vom Kabelende aus). Der Entdrillgreifer 110 kann beispielsweise mit Hilfe eines in der Figur 2 dargestellten elektrischen Antriebs um die Bearbeitungsachse B in beiden Richtungen jeweils mit programmierbarem Winkel gedreht werden. Programmierbar, wie hierin verwendet, bezeichnet ein Vorgeben, insbesondere automatisches Vorgeben, des jeweiligen Wertes für eine automatische Ablaufsteuerung, die auf die Gegebenheiten anpassbar bzw. angepasst ist, beispielsweise die konkrete Art und Ausgestaltung des Kabelendes 15.

Der Kabelverlauf bezeichnet den Verlauf des Kabels vom endseitigen Abschluss des Kabelendes 15 aus. Der Klemmgreifer 120 ist im Kabelverlauf aufwärts des Entdrillgreifers 110 angeordnet. Der Kabelgreifer 130 ist im Kabelverlauf aufwärts des Klemmgreifers angeordnet. Der Klemmgreifer 120 befindet sich mithin zwischen dem Entdrillgreifer 110, der einen Bereich am endseitigen Abschluss des Kabelendes 15 klemmen kann, und dem Kabelgreifer 130.

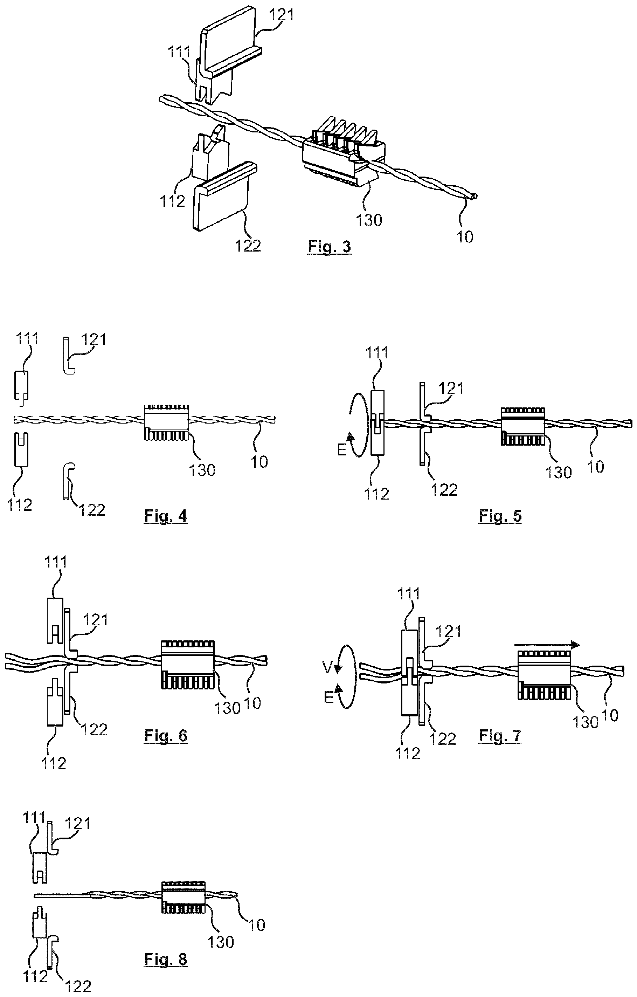

Fig. 3 zeigt eine perspektivische Ansicht von Teilen der Vorrichtung 100 aus Fig. 2, nämlich der Entdrillbacken 111, 112, der Klemmplatten 121, 122 und des Kabelgreifers 130. Zusätzlich ist in Fig. 3 ein geklemmtes Kabel 10 aus zwei Einzelleitungen 11, 12 gezeigt. In der dargestellten Ausführungsform ist das Kabel 10 linear in Richtung der Kabelachse A bzw. der Bearbeitungsachse B beweglich; der Entdrillgreifer 110 ist ortsfest; und der Klemmgreifer 120 ist linear zumindest in Richtung der Kabelachse A bzw. der Bearbeitungsachse B beweglich. Es ist auch denkbar, dass das Kabel 10 nicht bewegt wird; der Entdrillgreifer 110 linear zumindest in Richtung der Kabelachse A bzw. der Bearbeitungsachse B beweglich ist; und der Klemmgreifer 120 ist linear zumindest in Richtung der Kabelachse A bzw. der Bearbeitungsachse B beweglich ist. Die Bewegungen Die Fig. 4 bis 8 zeigen jeweils in einer Seitenansicht auf die Teile aus Fig. 3 die Positionsrelation der Teile im Verfahrensablauf eines Verfahrens gemäss einer Ausführungsform.

Fig. 4 zeigt eine Ausgangslage. Das Kabel 10 wird vom Kabelgreifer 130 gehalten in die Vorrichtung 100 eingebracht und so platziert, dass die Klemmplatten 121, 122 des in Richtung der Kabelachse A und Bearbeitungsachse B ausgerichteten Klemmgreifers 120 am endseitigen Abschluss des Kabelendes 15 (dem Anfang des zu entdrillenden Kabelabschnittes) stehen und die Entdrillbacken 111, 112 des Entdrillgreifers 110 sich am kabelseitigen Abschluss des Kabelendes 15 befinden. Es kann vorgesehen sein, dass das Kabel 10 vor dem gleich beschriebenen Entdrillvorgang ausgerichtet wird, d. h. gedreht und/oder linear bewegt wird, um das Kabel 10 an der richtigen Stelle und ggf. mit bereits nebeneinanderliegenden Einzelleitungen 11, 12 zu klemmen. Beispielsweise wird für dieses Ausrichten eine Kamera und eine Bildauswertung verwendet.

Fig. 5 zeigt einen Entdillvorgang. Nachdem die Klemmplatten 121, 122 und die Entdrillbacken 111, 112 geschlossen sind, rotiert der Entdrillgreifer 110 entgegen der Verdrillrichtung V des Kabels 10 um einen vorgegebenen oder vorgebbaren Winkelbetrag. Die Entdrillrichtung E ist in Fig. 5 mit einem Pfeil angedeutet. Der Winkelbetrag ist im allgemeinen so vorgegeben, dass das Kabelende 15 vollständig entdrillt wird. Dieser Winkelbetrag lässt sich beispielsweise aus der Schlaglänge der Verdrillung (dem Abstand von einem Kreuzungspunkt bis zum anschliessenden gleichartigen Kreuzungspunkt der verdrillten Leitungen bei Betrachtung aus derselben Richtung bzw. in derselben Ebene) und der Anzahl von Verdrillschlägen herleiten. Je nach Beschaffenheit der Einzelleitungen 11, 12, beispielsweise deren Elastizität, kann es angebracht sein, etwas über diesen Winkelbetrag hinaus und wieder zurückzudrehen (Über-Entdrillen).

Fig. 6 zeigt die Vorbereitung eines Glättvorganges im Anschluss an den Entdrillvorgang. Die geöffneten Entdrillbacken 111, 112 verfahren zu den Klemmplatten 121, 122 und werden wieder geschlossen.

Fig. 7 zeigt einen Glättvorgang. Das Kabelende 15 wird infolge einer Längsbewegung des Kabelgreifers 130, die durch einen Pfeil in Fig. 7 angedeutet ist, durch die geschlossenen Klemmplatten 121, 122 und die geschlossenen Entdrillbacken 111, 112 gezogen. Typischerweise wird das Kabelende 15 im Wesentlichen über die gesamte Länge a1 des Kabelendes 15 durch die geschlossenen Klemmplatten 121, 122 und die geschlossenen Entdrillbacken 111, 112 gezogen. Wie oben erwähnt, ist es aber auch möglich, dass das Kabelende 15 stillsteht, während sich der Klemmgreifer 120 und der Entdrillgreifer 110 bewegen, oder dass der Entdrillgreifer 110 das Kabel durch die geschlossenen Klemmplatten 121, 122 zieht. Während dieser Relativbewegung, oder Längsbewegung, führt der Entdrillgreifer 110 mit den um die Einzelleitungen 11, 12 am Kabelende 15 geschlossenen Entdrillbacken 111, 112 mehrere oszillierende Drehbewegungen, oder Schwenkungen, um die Kabelachse A aus, d. h. abwechselnd (oszillierende) in Verdrillrichtung V und in Entdrillrichtung E, wie mit dem Doppelpfeil in Fig. 7 gezeigt.

Es kann eine Geschwindigkeit der Längsbewegung und/oder eine Schwenkgeschwindigkeit des Entdrillgreifers 110 und/oder ein Schwenkwinkel des Entdrillgreifers 110 vorgegeben werden, beispielsweise als vorab festgelegte oder festlegbare, insbesondere in Abhängigkeit der Eigenschaften des Kabels festgelegte, Prozessparameter in einer (nicht dargestellten) Steuerungseinrichtung der Vorrichtung 100. Die Prozessparameter können beispielsweise für jede zu verarbeitende Kabelvariante festgelegt, insbesondere abgespeichert sein.

Es ist denkbar, vor dem Glättvorgang die Schliesskraft der Klemmplatten 121, 122 und/oder die Schliesskraft der Entdrillbacken 111, 112 zu verringern. Insbesondere kann die jeweilige Schliesskraft so verringert werden, dass ein Beschädigen einer (nicht dargestellten) Isolierung, die die Einzelleitungen jeweils umgibt, verhindert wird, wenn im Zuge des Glättvorgangs das geklemmte Kabel durch die Entdrillbacken und die Klemmplatten gezogen wird. Die Schliesskraft wird aber nur soweit verringert, dass die Klemmplatten 121, 122 bzw. die Entdrillbacken 111, 112 noch geschlossen sind, also klemmend auf das Kabel 10 einwirken.

Fig. 8 zeigt den Abschluss des Glättvorgangs. Der Glättvorgang ist in der Regel abgeschlossen, wenn der endseitige Abschluss des Kabelendes 15 den Entdrillgreifer 110 erreicht. Anschliessend werden die Klemmplatten 121, 122 und die Entdrillbacken 111, 112 geöffnet, und das Kabel 10 kann weitertransportiert oder entnommen werden. Es ist auch möglich, durch entsprechendes Verschieben bzw. Verfahren des Kabels 10, der Klemmplatten 121, 122 bzw. der Entdrillbacken 111, 112 eine oder mehrere Wiederholungen des Glättvorgangs anzuschliessen.

Es versteht sich, dass die obigen Aufgaben, Merkmale, Konfigurationen etc. beispielhaft sind und innerhalb des Offenbarungsgehalts der vorliegenden Offenbarung miteinander passend kombiniert bzw. teilweise weggelassen werden können.

## Patentansprüche

1. Verfahren zum Entdrillen und Glätten eines Kabelendes (15) eines aus einer Mehrzahl von in einer Verdrillrichtung (V) um eine Kabelachse (A) verdrillten Einzelleitungen (11, 12) gebildeten Kabels (10) mittels einer Vorrichtung (100), wobei die Vorrichtung (100) umfasst:
einen Entdrillgreifer (110) mit einer ersten Entdrillbacke (111) und einer zweiten Entdrillbacke (112);
einen im Kabelverlauf aufwärts des Entdrillgreifers (110) angeordneten Klemmgreifer (120) mit einer ersten Klemmplatte (121) und einer zweiten Klemmplatte (122);
einen im Kabelverlauf aufwärts des Klemmgreifers (120) angeordneten Kabelgreifer (130),
wobei das Verfahren umfasst:
Greifen des Kabels (10) mit dem Kabelgreifer (130);
Einbringen des Kabelendes (15) zwischen die geöffneten Klemmplatten (121, 122) des Klemmgreifers (120) und die geöffneten Entdrillbacken (111, 112) des Entdrillgreifers (110) ;
Schliessen der Klemmplatten (121, 122) und der Entdrillbacken (111, 112);
Rotieren des Entdrillgreifers (110) in einer Entdrillrichtung (E) entgegen der Verdrillrichtung (V) zum Entdrillen des Kabelendes (15);
Öffnen der Entdrillbacken (111, 112), Verkleinern des Abstandes der Entdrillbacken (111, 112) zu den Klemmplatten (121, 122) entlang der Kabelachse (A), und Schliessen der Entdrillbacken (111, 112);
Durchführen eines Glättvorgangs des Kabelendes (15) durch Vergrössern des Abstandes zwischen Kabelgreifer (130) und Klemmgreifer (120) bei geklemmtem Kabel (10) entlang der Kabelachse (A) und gleichzeitig Ausüben von oszillierenden Drehbewegungen des Entdrillgreifers (110).

2. Verfahren nach Anspruch 1, wobei die oszillierenden Drehbewegungen des Entdrillgreifers (110) abwechselnd in Verdrillrichtung (V) und Entdrillrichtung (E) durchgeführt werden.

3. Verfahren nach einem der vorhergehenden Ansprüche, wobei die oszillierenden Drehbewegungen in Verdrillrichtung (V) und in Entdrillrichtung (E) jeweils mit weniger als einer Umdrehung des Entdrillgreifers (110) durchgeführt werden, vorzugsweise mit weniger als einer Dreiviertelumdrehung oder mit weniger als einer halben Umdrehung.

4. Verfahren nach einem der vorhergehenden Ansprüche, wobei das Rotieren des Entdrillgreifers (110) in einer Entdrillrichtung (E) entgegen der Verdrillrichtung (V) zum Entdrillen des Kabelendes (15) über ein vollständiges Entdrillen der Einzelleitungen (11, 12) des Kabelendes (15) hinaus fortgesetzt wird, insbesondere um mehr als eine halbe Umdrehung des Entdrillgreifers (110) oder um mehr als eine Umdrehung des Entdrillgreifers (110).

5. Verfahren nach einem der vorhergehenden Ansprüche, weiter umfassend:
vor dem Glättvorgang, Verringern einer Schliesskraft der Klemmplatten (121, 122) und/oder Verringern einer Schliesskraft der Entdrillbacken (111, 112).

6. Verfahren nach einem der vorhergehenden Ansprüche, wobei beim Glättvorgang mindestens drei oszillierende Drehbewegungen ausgeübt werden, vorzugsweise mindestens fünf oder mindestens zehn.

7. Verfahren nach einem der vorhergehenden Ansprüche, weiter umfassend:
vor dem Glättvorgang, Vorgeben mindestens eines Parameters aus einer Geschwindigkeit beim Vergrössern des Abstands zwischen Kabelgreifer (130) und Klemmgreifer (120), einer Oszillationsgeschwindigkeit beim Ausüben der oszillierenden Drehbewegungen, einem Oszillationswinkel beim Ausüben der oszillierenden Drehbewegungen.

8. Verfahren nach einem der vorhergehenden Ansprüche, weiter umfassend nach dem Glättvorgang:
Öffnen der Klemmplatten (121, 122) und der Entdrillbacken (111, 112);
Verkleinern des Abstands zwischen Kabelgreifer (130) und Klemmgreifer (120);
Schliessen der Klemmplatten (121, 122) und der Entdrillbacken (111, 112);
Durchführen eines weiteren Glättvorgangs des Kabelendes (15) durch Vergrössern des Abstands zwischen Kabelgreifer (130) und Klemmgreifer (120) bei geklemmtem Kabel (10) und gleichzeitig Ausüben von oszillierenden Drehbewegungen des Entdrillgreifers (110).

9. Vorrichtung (100) mit einem Entdrillgreifer (110) mit einer ersten Entdrillbacke (111) und einer zweiten Entdrillbacke (112), einem im Kabelverlauf aufwärts des Entdrillgreifers (110) angeordneten Klemmgreifer (120) mit einer ersten Klemmplatte (121) und einer zweiten Klemmplatte (122), und einem im Kabelverlauf aufwärts des Klemmgreifers (120) angeordneten Kabelgreifer (130), wobei die Vorrichtung (100) konfiguriert ist zum Ausführen des Verfahrens nach einem der vorhergehenden Ansprüche.

10. Vorrichtung (100) nach Anspruch 9, wobei der Entdrillgreifer (110) einen pneumatischen Entdrill-Parallelgreifer umfasst, der die Entdrillbacken (111, 112) trägt.

11. Vorrichtung (100) nach einem der Ansprüche 9 bis 10, wobei der Klemmgreifer (120) einen pneumatischen Klemm-Parallelgreifer umfasst, der die Klemmplatten (121, 122) trägt.

12. Vorrichtung (100) nach einem der Ansprüche 10 bis 11, wobei der pneumatische Entdrill-Parallelgreifer und/oder der pneumatische Klemm-Parallelgreifer jeweils ein Druckregelventil zum Vorgeben einer Klemmkraft umfasst.

13. Vorrichtung (100) nach einem der Ansprüche 9 bis 12, wobei der Entdrillgreifer (110) zum Drehen um die Kabelachse (A) in einem vorgebbaren, insbesondere programmierbaren, Winkel ausgebildet ist.

14. Vorrichtung (100) nach einem der Ansprüche 9 bis 13, wobei der Klemmgreifer (120) in Kabellängsrichtung verschiebbar, insbesondere programmierbar verschiebbar, ausgebildet ist.

## Claims

1. A method for untwisting and smoothing a cable end (15) of a cable (10), which is formed from a plurality of single lines (11, 12) which are twisted in a twisting direction (V) about a cable axis (A), by means of a device (100), wherein the device (100) comprises:
an untwisting gripper (110) having a first untwisting jaw (111) and a second untwisting jaw (112);
a clamping gripper (120), which is arranged upstream of the untwisting gripper (110) in the run of the cable, having a first clamping plate (121) and a second clamping plate (122);
a cable gripper (130) which is arranged upstream of the clamping gripper (120) in the run of the cable,
wherein the method comprises:
gripping the cable (10) using the cable gripper (130);
introducing the cable end (15) between the open clamping plates (121, 122) of the clamping gripper (120) and the open untwisting jaws (111, 112) of the untwisting gripper (110);
closing the clamping plates (121, 122) and the untwisting jaws (111, 112);
rotating the untwisting gripper (110) in an untwisting direction (E) counter to the twisting direction (V) for untwisting the cable end (15);
opening the untwisting jaws (111, 112), reducing the distance of the untwisting jaws (111, 112) from the clamping plates (121, 122) along the cable axis (A) and closing the untwisting jaws (111, 112);
carrying out a smoothing process of the cable end (15) by enlarging the distance between cable gripper (130) and clamping gripper (120) when the cable (10) is clamped along the cable axis (A) and at the same time performing oscillating rotational movements of the untwisting gripper (110).

2. The method according to Claim 1, wherein the oscillating rotational movements of the untwisting gripper (110) are carried out alternately in the twisting direction (V) and untwisting direction (E).

3. The method according to one of the preceding claims, wherein the oscillating rotational movements are carried out in the twisting direction (V) and in the untwisting direction (E), with less than one revolution of the untwisting gripper (110) in each case, preferably with less than one three-quarter revolution or with less than one half revolution.

4. The method according to one of the preceding claims, wherein the rotation of the untwisting gripper (110) is continued in an untwisting direction (E) counter to the twisting direction (V) for untwisting the cable end (15) beyond a complete untwisting of the single lines (11, 12) of the cable end (15), particularly by more than one half revolution of the untwisting gripper (110) or by more than one revolution of the untwisting gripper (110).

5. The method according to one of the preceding claims, further comprising:
reducing a closing force of the clamping plates (121, 122) and/or reducing a closing force of the untwisting jaws (111, 112) prior to the smoothing process.

6. The method according to one of the preceding claims, wherein during the smoothing process, at least three oscillating rotational movements are performed, preferably at least five or at least ten.

7. The method according to one of the preceding claims, further comprising:
prior to the smoothing process, specifying at least one parameter from a speed during the enlargement of the distance between cable gripper (130) and clamping gripper (120), an oscillation speed when performing the oscillating rotational movements, and an oscillation angle when performing the oscillating rotational movements.

8. The method according to one of the preceding claims, further comprising, after the smoothing process:
opening the clamping plates (121, 122) and the untwisting jaws (111, 112);
reducing the distance between cable gripper (130) and clamping gripper (120);
closing the clamping plates (121, 122) and the untwisting jaws (111, 112);
carrying out a further smoothing process of the cable end (15) by enlarging the distance between cable gripper (130) and clamping gripper (120) when the cable (10) is clamped and at the same time performing oscillating rotational movements of the untwisting gripper (110).

9. A device (100) having an untwisting gripper (110) having a first untwisting jaw (111) and a second untwisting jaw (112), a clamping gripper (120), which is arranged upstream of the untwisting gripper (110) in the run of the cable, having a first clamping plate (121) and a second clamping plate (122), and a cable gripper (130), which is arranged upstream of the clamping gripper (120) in the run of the cable, wherein the device (100) is configured for carrying out the method according to one of the preceding claims.

10. The device (100) according to Claim 9, wherein the untwisting gripper (110) has a pneumatic untwisting parallel gripper, which carries the untwisting jaws (111, 112).

11. The device (100) according to one of Claims 9 to 10, wherein the clamping gripper (120) comprises a pneumatic clamping parallel gripper, which carries the clamping plates (121, 122).

12. The device (100) according to one of Claims 10 to 11, wherein the pneumatic untwisting parallel gripper and/or the pneumatic clamping parallel gripper in each case comprises a pressure control valve for specifying a clamping force.

13. The device (100) according to one of Claims 9 to 12, wherein the untwisting gripper (110) is designed for rotating about the cable axis (A) in a specifiable, particularly programmable, angle.

14. The device (100) according to one of Claims 9 to 13, wherein the clamping gripper (120) is designed to be displaceable, particularly displaceable in a programmable manner, in the cable longitudinal direction.

## Revendications

1. Procédé de détorsadage et de lissage d'une extrémité de câble (15) d'un câble (10) formé d'une pluralité de conducteurs individuels (11, 12) torsadés autour d'un axe de câble (A) dans une direction de torsadage (V) au moyen d'un dispositif (100), sachant que le dispositif (100) comprend :
une pince de détorsadage (110) avec une première mâchoire de détorsadage (111) et une deuxième mâchoire de détorsadage (112),
une pince de serrage (120) disposée en amont de la pince de détorsadage (110) dans le profil de câble avec une première plaque de serrage (121) et une deuxième plaque de serrage (122),
une pince de préhension de câble (130) disposée en amont de la pince de serrage (120) dans le profil de câble,
sachant que le procédé comprend :
la saisie du câble (10) avec la pince de préhension de câble (130),
la mise en place de l'extrémité de câble (15) entre les plaques de serrage ouvertes (121, 122) de la pince de serrage (120) et les mâchoires de détorsadage ouvertes (111, 112) de la pince de détorsadage (110),
la fermeture des plaques de serrage (121, 122) et des mâchoires de détorsadage (111, 112),
la rotation de la pince de détorsadage (110) dans une direction de détorsadage (E) contraire à la direction de torsadage (V) pour détorsader l'extrémité de câble (15),
l'ouverture des mâchoires de détorsadage (111, 112), la réduction de l'intervalle des mâchoires de détorsadage (111, 112) par rapport aux plaques de serrage (121, 122) le long de l'axe de câble (A) et la fermeture des mâchoires de détorsadage (111, 112),
l'exécution d'une opération de lissage de l'extrémité de câble (15) par agrandissement de l'intervalle entre la pince de préhension de câble (130) et la pince de serrage (120) avec le câble serré (10) le long de l'axe de câble (A) et simultanément l'exercice des mouvements rotatifs oscillants de la pince de détorsadage (110).

2. Procédé selon la revendication 1, sachant que les mouvements rotatifs oscillants de la pince de détorsadage (110) sont effectués en alternance en direction de torsadage (V) et en direction de détorsadage (E).

3. Procédé selon l'une quelconque des revendications précédentes, sachant que les mouvements rotatifs oscillants sont effectués en direction de torsadage (V) et en direction de détorsadage (E) à chaque fois avec moins d'une rotation de la pince de détorsadage (110), de préférence avec moins de trois quarts de rotation ou avec moins d'une demi-rotation.

4. Procédé selon l'une quelconque des revendications précédentes, sachant que la rotation de la pince de détorsadage (110) est poursuivie au-delà d'un détorsadage complet des conducteurs individuels (11, 12) de l'extrémité de câble (15) dans une direction de détorsadage (E) contraire à la direction de torsadage (V) pour détorsader l'extrémité de câble (15), en particulier de plus d'une demie rotation de la la pince de détorsadage (110) ou de plus d'une rotation de la pince de détorsadage (110).

5. Procédé selon l'une quelconque des revendications précédentes, comprenant en plus :
avant l'opération de lissage, réduction d'une force de fermeture des plaques de serrage (121, 122) et/ou réduction d'une force de fermeture des mâchoires de détorsadage (111, 112).

6. Procédé selon l'une quelconque des revendications précédentes, sachant que lors de l'opération de lissage, au moins trois mouvements rotatifs oscillants sont exercés, de préférence au moins cinq ou au moins dix.

7. Procédé selon l'une quelconque des revendications précédentes, comprenant en plus :
avant l'opération de lissage, prédéfinition d'au moins un paramètre à partir d'une vitesse en l'agrandissant l'intervalle entre la pince de préhension de câble (130) et la pince de serrage (120), d'une vitesse d'oscillation en exerciçant des mouvements rotatifs oscillants, d'un angle d'oscillation en exerciçant des mouvements rotatifs oscillants.

8. Procédé selon l'une quelconque des revendications précédentes, comprenant en plus après l'opération de lissage :
l'ouverture des plaques de serrage (121, 122) et des mâchoires de détorsadage (111, 112),
la réduction de l'intervalle entre la pince de préhension de câble (130) et la pince de serrage (120),
la fermeture des plaques de serrage (121, 122) et des mâchoires de détorsadage (111, 112),
l'exécution d'une autre opération de lissage de l'extrémité de câble (15) par agrandissement de l'intervalle entre la pince de préhension de câble (130) et la pince de serrage (120) avec le câble serré (10) et simultanément l'exercice de mouvements rotatifs oscillants de la pince de détorsadage (110).

9. Dispositif (100) avec une pince de détorsadage (110) avec une première mâchoire de détorsadage (111) et une deuxième mâchoire de détorsadage (112), une pince de serrage (120) disposée en amont de la pince de détorsadage (110) dans le profil de câble avec une première plaque de serrage (121) et une deuxième plaque de serrage (122) et une pince de préhension de câble (130) disposée en amont de la pince de serrage (120) dans le profil de câble, sachant que le dispositif (100) est configuré pour exécuter le procédé selon l'une quelconque des revendications précédentes.

10. Dispositif (100) selon la revendication 9, sachant que la pince de détorsadage (110) comprend une pince parallèle de préhension pneumatique, qui porte les mâchoires de détorsadage (111, 112).

11. Dispositif (100) selon l'une quelconque des revendications 9 à 10, sachant que la pince de serrage (120) comprend une pince parallèle de serrage pneumatique, qui porte les plaques de serrage (121, 122).

12. Dispositif (100) selon l'une quelconque des revendications 10 à 11, sachant que la pince parallèle de détorsadage pneumatique et/ou la pince parallèle de serrage pneumatique comprennent respectivement une soupape de régulation de pression pour prédéfinir une force de serrage.

13. Dispositif (100) selon l'une quelconque des revendications 9 à 12, sachant que la pince de détorsadage (110) est constituée pour tourner autour de l'axe de câble (A) dans un angle prédéfinissable, en particulier programmable.

14. Dispositif (100) selon l'une quelconque des revendications 9 à 13, sachant que la pince de serrage (120) est constituée déplaçable dans la direction longitudinale de câble, en particulier déplaçable de façon programmable.
